# EUROPEAN PATENT SPECIFICATION

(11) **EP 2 228 185 B1**
(45) Date of publication and mention of the grant of the patent: **23.10.2013**
(21) Application number: 10156432.6
(22) Date of filing: 12.03.2010
(51) Int. Cl.: B28B 11/04, C04B 41/00, C04B 41/48

(54) **Method for consolidating slabs of stone material.**
Verfahren zum Verfestigen von Natursteinplatten
Procédé de consolidation de plaques en pierre naturelle

(30) Priority: 13.03.2009 IT TO20090186
(43) Date of publication of application: 15.09.2010
(73) Proprietor: Antolini Luigi & C. S.p.A., 37015 Sant' Ambrogio di Valpolicella (IT)
(72) Inventor: Lunardi, Mauro, 37015 Sant' Ambrogio di Valpolicella (VR) (IT); Antolini, Alberto, 37015 Sant'Ambrogio di Valpolicella (VR) (IT)
(74) Representative: Robba, Pierpaolo

(56) References cited:
- EP-A1- 0 370 799
- EP-A1- 0 962 430
- WO-A1-2004/031500
- ES-A1- 2 242 496
- US-A- 4 002 788

## Description

### Technical field

The present invention relates to a method for consolidating slabs of stone material.

More particularly the invention relates to a method for consolidating slabs of stone material, for instance marble, stone or granite, by impregnation of the slab with hardenable resin.

The slabs of stone material generally consist of a parallelepiped body with a surface of some square metres. Slabs of such kind may have sides 1.0 to 4.0 m long and be 0.5 to 10 cm thick. A standard size for slabs of stone material at present commercially available is a length of 3.5 m, a width of 1.4 m and a thickness of some centimetres, for instance 1.0 to 3.0 cm. The slabs of stone material are generally obtained by cutting stone blocks of some cubic metres according to parallel planes.

### Prior art

In stone working field, it is known to operate on blocks of material for obtaining slabs with reduced thickness, from which the final products, e.g. slabs for coating buildings, can then be obtained.

It also known that both the blocks and the slabs frequently have cracks due to the irregularity of the material. Cracks in stone material are a drawback from both the aesthetic and the structural viewpoint, and therefore can compel to reject the material, with a consequent considerable incidence on the costs.

In the past, attempts have therefore been made to solve that problem by healing the stone material by means of synthetic resins introduced into the cracks.

EP 0 962 430 discloses a method for consolidating stone blocks through impregnation with synthetic resin under vacuum. In order to obtain the impregnation, the block is initially laterally coated with sheets of impermeable material provided with spacers. The lateral coating also extends upwards beyond the block height, thereby defining on the top surface of the block a vessel for containing the fluid resin. The block is then introduced into an autoclave and subsequently the resin is poured onto the block so as to make it penetrate into the cracks to be healed. The resin is then hardened and the block consolidated in this manner is reduced into slabs, for instance by sawing.

Another method for consolidating stone blocks by impregnation with resin is disclosed in EP 1 170 271. Also in this case, the block is first enclosed within a lateral containing barrier comprising a separation net, and then it is impregnated under vacuum with hardenable resin. The block consolidated in this manner can then be reduced into slabs by sawing.

The above methods are suitable for healing stone blocks with a volume of some cubic metres. Due to the considerable block size and to the fact that not all the cracks to be healed communicate with the top surface of the block, it is necessary that the resin is made to penetrate also from the sides. To this end, the known methods always provide for measures for spacing the lateral containing barrier from the side surface of the block, so as to define a sort of hollow space for the passage of the resin through the flanks of the block. Spacers intended to this aim are therefore integrated into the coating material forming the barrier itself, or a layer of permeable material is placed between the coating material and the side surface of the block.

Even though the known methods give satisfactory results, the need to consolidate also the slabs of stone material is however felt in the field. This need is particularly evident in case the material has not undergone any consolidation or in case an optimal impregnation of the material could not be achieved, for instance due to a considerable amount of cracks or because impregnation has not been properly carried out.

The methods more commonly used for consolidating slabs of stone material can be substantially divided into two groups.

In the first group, the hardenable resin is manually or automatically distributed on the fractured slab along suitable resin application lines. Then, the slab is introduced into a vacuum chamber in which vacuum is created in order to cause the forced penetration of the resin into the cracks. This process has the severe limitation that the resin is applied before vacuum application, so that the subsequently applied vacuum has a limited effect. Moreover, the amount of resin that can be deposited on the slab before introducing it into the vacuum chamber is necessarily very limited, since the slab is substantially planar and the excess resin would leave the slab plane without being used.

In the second group, the resin is distributed on the slab while the latter is under vacuum and has been arranged in packs of vertically held slabs. According to this technique, the resin is introduced so as to impregnate the whole slab pack, which is located in the vacuum chamber or within an envelope in which vacuum is made, and therefore the technique has the drawback that it requires forming the slab pack, which is a long and expensive operation during which the risk of breaking the slabs exists.

Another example of consolidation method, yet operating by immersion, is disclosed in IT 1225588, which teaches consolidating a slab of stone material by immersion into a low viscosity resin under vacuum. The resin is subsequently hardened by heating in a furnace. Moreover, a face of the slab can possibly be coated in advance in order to make it impermeable to the resin, in particular if through fractures or cracks exist.

The method is however difficult to be put into practice because of the difficulty of hardening the resin in which the slab has been immersed, without the resin adhering to the support required in order to bear the slab.

A similar technique is also applied to the stone blocks from which the slabs are subsequently obtained by sawing.

An example of the above method, applied to the blocks of stone material but possibly also to packs of slabs arranged side by side, is disclosed in WO 2007/052319, which moreover teaches using a flexible envelope, in which vacuum is made and into which the resin is subsequently introduced in order to obtain the impregnation.

ES2242496 discloses a method for consolidating slabs of stone material according to the preamble of claim 1.

It is a first object of the invention to provide a method for consolidating slabs of stone material, which does not have the drawbacks of the prior art and which can be industrially applicable at limited costs.

It is another object of the invention to provide a method of the above kind which can be advantageously applied to the individual treatment of individual slabs.

It is a further, but not the last object of the invention to provide a method of the above kind which can be used for consolidating slabs of any thickness and/or having rough surfaces.

### Description of the Invention

The above and other objects are achieved by the method as claimed in the appended claims.

According to the invention, the containing barrier associated with the slab advantageously has a twofold function: on the one side, it defines a vessel for containing the resin and preventing the resin from laterally trickling while being poured onto the horizontal slab surface; on the other side, it allows forming on the horizontal slab surface a resin layer with sufficient thickness to ensure that the whole exposed surface of the slab is covered with resin, even when the surface is very rough, allowing the force exerted by the external pressure to produce the effect known as "piston effect".

Thanks to the impermeable peripheral barrier adhering to the slab substantially without interruptions and to the step sequence of the method according to the invention, the consumption of excess resin, i.e. resin which does not penetrate into the fractures or cracks, is reduced to a minimum, with a considerable economic saving with respect to the prior art.

Advantageously, according to an embodiment of the invention, the containing barrier is applied to the horizontal slab surface, thereby enabling the treatment even of very thin slabs, to which adhesion of a side edge would be difficult or impossible to obtain.

### Brief Description of the Figures

A preferred embodiment of the method according to the invention will be described with reference to the accompanying drawings, in which:
- Fig. 1 is a schematic view of a variant embodiment of the method according to the invention;
- Fig. 2 shows a schematic view of the method according to the invention.

### Description of a Preferred Embodiment

Referring to the accompanying drawings, the method includes:
- A preparation step in which slab 11 to be consolidated, i.e. a slab in which cracks or fractures 13a, 13b, 13c to be consolidated are present, is horizontally placed on a supporting tray 15, preferably comprising holes 17 to provide a proper air circulation. According to the invention, tray 15, at least on the face on which slab 11 lies, is made of or covered with a material anti-adherent to the resin that will be subsequently employed for consolidating slab 11.
   In the alternative or in combination, it is also possible to cover the face of slab 11 intended to contact tray 15 with a material suitable for preventing the injected resin from flowing out from the opposite slab side: for instance, it is possible to use adhesive plastic sheets or the like, or adhesive materials made of low-melting films, for instance EVA films or the like, which could for instance undergo a heating pre-treatment in order they are made to better adhere to the slab.
- A washing step in which slab 11 is washed at high pressure with water, preferably mixed with suitable additives known in the field.
- A heat treatment step in which slab 11 is thermally treated, that is to say it is dried by means of heaters known in the field, so as to remove the residual moisture as much as possible.
- A step in which slab 11 is associated with a peripheral containing barrier 19, preferably along the whole perimeter of slab 11, in order to define a corresponding barrier impermeable to the fluid resin and adhering to the slab substantially without interruptions, that is, in such a manner as to avoid the presence of passageways for the resin between said barrier 19 and the surface of slab 11 such barrier is associated with. Said barrier 19 is therefore arranged to contain the resin which will be poured in fluid condition onto the slab from the top during a successive pouring step, thereby preventing the resin from flowing away and avoiding the consequent wastes.

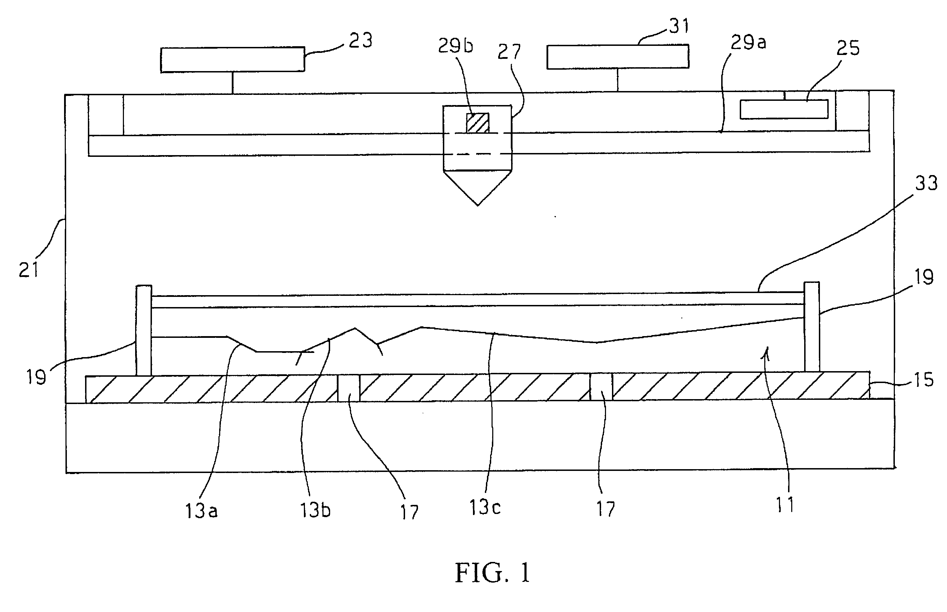

According to a preferred embodiment of the invention, said barrier will be made by a corresponding tape 19 applied to the side surface of slab 11 (Fig. 1), that is, to the vertical faces of slab 11 with respect to tray 15. The tape will be preferably chosen of a material anti-adherent to the resin, for instance a structural silicone tape. Moreover, tape 19 will have a greater width than the maximum thickness of slab 11: for instance, it the slab is 2 cm thick, the tape will be 3 cm wide, so that the tape height exceeding the exposed face of the slab is capable of defining a lateral containing barrier for the resin, sufficient to compensate the surface roughness existing on slab 11.

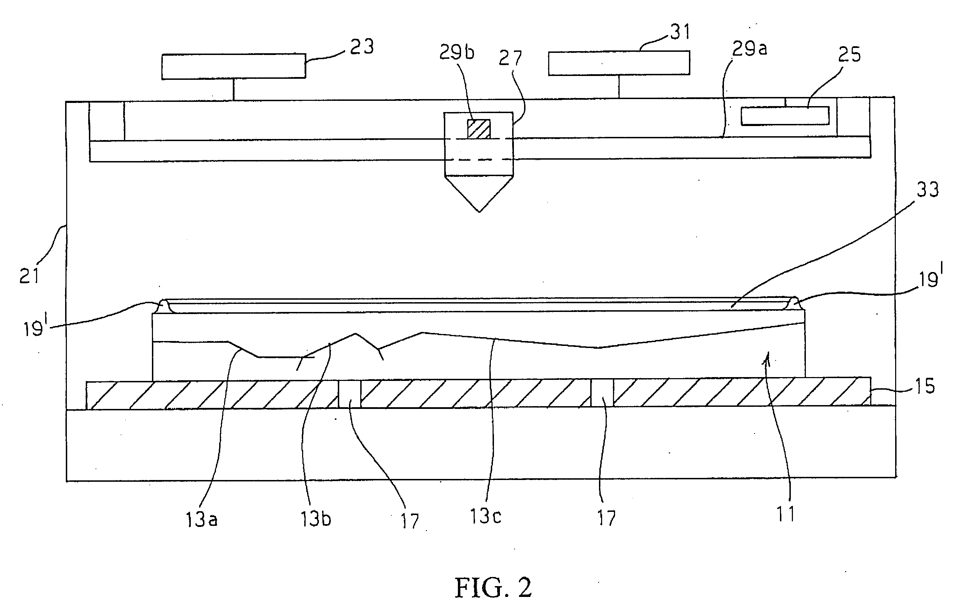

According to the method of the invention the peripheral barrier is defined directly on the exposed face of slab 11, by means of an impermeable material having a substantially smooth face that is intended to be coupled with the slab and that adheres to the top surface of the slab so as to avoid the presence of passageways for the resin between said material and the top surface of the slab. Said material can be for instance an impermeable bead 19', for instance a solid or hollow tube of plastics or rubber or the like, having a cross section of any shape, for instance semicircular, rectangular, trapezoidal. Moreover, said bead can be self-adhesive or it can be fixed to the exposed face of the slab by means of a suitable adhesive, as shown in Fig. 2.

According to the invention said bead 19' is formed in situ by deposition of a hardenable material, preferably with quick cross-linking, such as hot-melt glue, bituminous primer ("catramina") or the like, which is deposited in fluid condition on the exposed surface of the slab, so as to avoid the presence of passageways for the resin between said material and the top surface of the slab.

A step, which preferably but not necessarily follows the above steps, in which slab 11, associated with barrier 19 or 19', is introduced into a vacuum chamber 21.

A first vacuum step in which vacuum conditions, e.g. at a pressure of -1 bar, are created within chamber 21 by means of a vacuum pump 23. During this step, the residual moisture present on the slab due to the vacuum will tend to evaporate, since slab 11 is still hot, and will be condensed in a condenser 25 located inside chamber 21.

A first step of pouring the resin onto slab 11 inside the perimeter defined by barrier 19, 19', so as to cover the entire corresponding exposed horizontal surface of slab 11. Preferably, this step is carried out by using a manipulator device 27, for instance arranged on perpendicular guides 29a, 29b for movement in the longitudinal and the transversal direction, respectively, inside vacuum chamber 21. Advantageously, low pressure resin pouring inside the volume defined by barrier 19 or 19' allows producing a resin layer or film 33 with uniform thickness, for instance some millimetres, applied onto the exposed surface of slab 11, which layer or film entirely covers slab 11 so that also surface roughness, if any, is embedded into the resin.

Once a time sufficient for resin penetration into cracks 13a, 13b, 13c of slab 11 has elapsed, a step of restoring the conditions of atmospheric pressure within the vacuum chamber is carried out. Advantageously, the pressure difference with respect to the previous vacuum conditions pushes resin 33 into the cracks, thereby substantially determining a piston effect.
- A second vacuum step, in which the vacuum chamber is brought to a vacuum degree lower than the preceding one (for instance, if the residual pressure in the first vacuum step was of the order of -1 bar, in this second vacuum step it can be for instance -0.5 bar). Actually, this further step of producing vacuum only serves for filling those areas which have absorbed almost all the applied resin, the deep penetration of the resin having already occurred in the pouring and impregnation step.
- A second pouring step in which, while maintaining the same vacuum conditions as in the previous step, the resin is centrally poured onto the slab, for instance always by means of manipulator 27 kept stationary at the centre of slab 11, so as to obtain a complete coating of the exposed surface of slab 11. Such a step ends when a time necessary for the resin distribution has elapsed. Preferably a detector or a group of detectors (not shown) checks that slab 11 is wholly covered with resin and, if this is not
   the case, further resin will be supplied.
- A step of restoring the atmospheric pressure within vacuum chamber 21 and waiting until air bubbles are no longer present on the applied resin.
- Preferably, a step of increasing the pressure within chamber 21 above atmospheric pressure, for instance by means of a compressor 31, preferably up to a pressure value in the range 2 to 10 bars, in order to complete with a considerable push the resin infiltration and the consequent slab impregnation.
- A step of restoring the conditions of atmospheric pressure within chamber 21
- A step of extraction of slab 11 from vacuum chamber 21.
- A resin hardening step, preferably carried out within a furnace.

Advantageously, by the method described, an optimum healing of the slab is achieved thanks to the deep and complete resin impregnation into the cracks and fractures.

Moreover, always thanks to the invention, it is advantageously possible to impregnate slabs of stone material in order to achieve a complete impregnation and healing at considerably reduced costs, due to the low consumption of excess resin.

## Claims

1. Method for consolidating slabs (11) of stone material by impregnation of the slab with hardenable fluid resin, comprising the steps of:
- providing a support tray (15);
- placing a slab (11) of stone material to be consolidated on said support tray (15);
- associating with the slab (11), a peripheral containing barrier (19; 19') impermeable to the fluid resin and adhering to the slab substantially without interruptions, said containing barrier being arranged to contain the resin that will be poured onto the slab from the top during a subsequent pouring step, thereby preventing the fluid resin from flowing outside said peripheral barrier;
- pouring the resin from the top onto the exposed face of the slab (11), inside the perimeter defined by said barrier (19; 19'), until the corresponding exposed face of the slab is completely covered;
- causing hardening of the resin;
**characterized in that** the peripheral containing barrier (19; 19') is formed along the whole perimeter of slab (11) by means of a hardenable material which is deposited in fluid condition on the top surface of the slab, so as to avoid the presence of passageways for the resin between said material and the top surface of the slab.

2. Method according to claim 1, wherein said material is a hot-melt glue, a bituminous primer or the like.

3. Method according to claim 1, wherein said tray (15) comprises holes (17) to provide a proper air circulation.

4. Method according to claim 1, wherein said tray is made of or covered with a material anti-adherent to the resin, at least on the face on which the slab (11) lies.

5. Method according to claim 1, comprising a washing step wherein the slab (11) is washed at high pressure, and a heat treatment step wherein the slab (11) is thermally treated, that is to say dried so as to remove the residual moisture as much as possible.

6. Method according to any of the preceding claims, wherein said resin pouring step is carried out under vacuum.

7. Method according to any of the preceding claims, comprising:
- a first step of producing vacuum conditions within a vacuum chamber (21) containing the slab (11);
- a first step of pouring the resin under vacuum onto the slab (11) so as to cover the entire horizontal exposed surface of the slab (11);
- a step of restoring the conditions of atmospheric pressure within the vacuum chamber;
- a second step of producing vacuum conditions at a vacuum degree lower than that of the preceding vacuum step within the vacuum chamber;
- a second step of pouring the resin under vacuum wherein the resin is further poured onto the slab, so as to obtain a complete coating of the exposed surface of the slab (11);
- a step of restoring the conditions of atmospheric pressure within the vacuum chamber (21);
- a step of extraction of the slab (11) from the vacuum chamber (21);
- a resin hardening step.

8. Method according to claim 7, wherein following the second pouring step said method further comprises:
- a step of increasing the pressure within the chamber (21) above the atmospheric pressure;
- a step of restoring the conditions of atmospheric pressure within the chamber (21).

## Patentansprüche

1. Verfahren zum Verfestigen von Natursteinplatten (11) durch Imprägnierung der Platte mit härtbarem flüssigem Harz, umfassend die folgenden Schritte :
- Vorsehen einer Tragplatte (15);
- Stellen einer zu verfestigenden Natursteinplatte (11) auf die Tragplatte (15) ;
- Verbinden einer umlaufenden Einschlussbarriere (19 ;19'), die gegenüber dem flüssigen Harz undurchlässig ist und im Wesentlichen unterbrechungsfrei an der Platte anhaftet, mit der Platte (11), wobei die Einschlussbarriere so angeordnet ist, dass sie das Harz einschließt, das während eines folgenden Gießschritts vom oben herab auf die Platte gegossen wird, wodurch das Harz daran gehindert wird, aus dieser umlaufenden Barriere auszufließen;
- Gießen des Harzes von oben herab auf die freiliegende Fläche der Platte (11), innerhalb des durch diese Barriere gebildeten Umfangs (19; 19'), bis die entsprechende freiliegende Fläche der Platte (11) völlig bedeckt wird;
- Härten lassen des Harzes ;
**dadurch gekennzeichnet, dass** die umlaufende Einschlussbarriere (19 ;19') entlang dem gesamten Umfang der Platte (11) durch ein härtbares Material gebildet ist, das in flüssigem Zustande auf der oberen Plattenfläche so abgelagert wird, dass das Vorhandensein von Harzdurchgängen zwischen diesem Material und der oberen Plattenfläche vermieden wird.

2. Verfahren nach Anspruch 1, wobei das Material ein Heißleim, ein Bitumenlack oder dergleichen ist.

3. Verfahren nach Anspruch 1, wobei die Tragplatte (15) Löcher (17) aufweist, um eine angemessene Luftzirkulation zu schaffen.

4. Verfahren nach Anspruch 1, wobei die Tragplatte aus einem gegenüber dem Harz nichthaftenden Material besteht oder mit einem solchen Material beschichtet ist, zumindest auf jener Seite, auf der die Platte (11) angeordnet ist.

5. Verfahren nach Anspruch 1, umfassend einen Spülungsschritt, wobei die Platte (11) mit Hochdruck gespült wird, sowie einen Wärmebehandlungsschritt, wobei die Platte (11) thermisch behandelt wird, nämlich so getrocknet wird, dass die Restfeuchtigkeit so weit wie möglich entfernt wird.

6. Verfahren nach irgendeinem der vorhergehenden Ansprüche, wobei der Schritt Harzgießschritt unter Vakuum durchgeführt wird.

7. Verfahren nach irgendeinem der vorhergehenden Ansprüche, umfassend:
- einen ersten Schritt, bei dem Vakuumsbedingungen in einer die Platte (11) enthaltenden Vakuumskammer (21) hergestellt werden ;
- einen ersten Schritt, bei dem das Harz unter Vakuum auf die Platte (11) so gegossen wird, dass es die gesamte freiliegende Horizontalfläche der Platte (11) bedeckt ;
- einen Schritt, bei dem die Umgebungsdruckbedingungen innerhalb der Vakuumskammer wiederhergestellt werden;
- einen zweiten Schritt, bei dem Vakuumsbedingungen in einer Höhe des Vakuums, die niedriger als in dem früheren Schritt der Herstellung von Vakuumsbedingungen ist, in der Vakuumskammer hergestellt werden ;
- einen zweiten Schritt des unter Vakuum durchgeführten Harzgießens, wobei das Harz auf die Platte weiter gegossen wird, so dass eine komplette Bedeckung der freiliegenden Fläche der Platte (11) erhalten wird ;
- einen Schritt, bei dem die Umgebungsdruckbedingungen innerhalb der Vakuumskammer (21) wiederhergestellt werden;
- einen Schritt, bei dem die Platte (11) aus der Vakuumskammer (21) herausgezogen wird;
- einen Schritt, bei dem das Harz härten gelassen wird.

8. Verfahren nach Anspruch 7, wobei das Verfahren, nach dem zweiten Gießschritt, weiter umfasst :
- einen Schritt, bei dem der Druck in der Kammer (21) auf oberhalb des Umgebungsdrucks erhöht wird;
- einen Schritt, bei dem die Umgebungsdruckbedingungen innerhalb der Vakuumskammer (21) wiederhergestellt werden.

## Revendications

1. Procédé pour la consolidation de plaques (11) en pierre naturelle par imprégnation de la plaque avec de la résine fluide durcissable, comprenant les étapes consistant à:
- fournir un plateau de support (15);
- placer une plaque (11) en pierre naturelle à être consolidé sur ledit plateau de support (15);
- associer à la plaque (11) une barrière périphérique de confinement (19; 19') imperméable à la résine fluide et adhérant à la plaque sensiblement sans interruptions, ladite barrière de confinement étant disposée de façon à confiner la résine qui sera coulée sur la plaque d'en haut lors d'une étape successive de coulée, en empêchant ainsi que la résine fluide s'écoule à l'extérieur de ladite barrière périphérique;
- couler la résine d'en haut sur la face exposée de la plaque (11), à l'intérieur du périmètre défini par ladite barrière (19; 19'), jusqu'à ce que la face exposée correspondante de la plaque est entièrement recouverte;
- provoquer le durcissement de la résine;
**caractérisé en ce que** la barrière périphérique de confinement (19; 19') est formée le long du périmètre entier de la plaque (11) par un matériau durcissable qui est déposé à l'état fluide sur la surface supérieure de la plaque, de façon à éviter la présence de voies de passage pour la résine entre ledit matériau et la surface supérieure de la plaque.

2. Procédé selon la revendication 1, dans lequel ledit matériau est une colle à chaud, un vernis bitumineux ou similaire.

3. Procédé selon la revendication 1, dans lequel ledit plateau (15) comporte des trous (17) pour fournir une circulation d'air appropriée.

4. Procédé selon la revendication 1, dans lequel ledit plateau est constitué de ou recouvert par un matériau anti-adhérent à la résine, au moins sur la face sur laquelle est située la plaque (11).

5. Procédé selon la revendication 1, comprenant une étape de lavage dans laquelle la plaque (11) est lavée à haute pression, et une étape de traitement thermique dans laquelle la plaque (11) est traitée thermiquement, c'est-à- dire séchée de façon à éliminer l'humidité résiduelle autant que possible.

6. Procédé selon l'une quelconque des revendications précédentes, dans lequel ladite étape de coulée de la résine est réalisée sous vide.

7. Procédé selon l'une quelconque des revendications précédentes, comprenant:
- une première étape de réalisation de conditions de vide dans une chambre à vide (21) contenant la plaque (11);
- une première étape de coulée de la résine sous vide sur la plaque (11) de manière à couvrir l'entière surface horizontale exposée de la plaque (11);
- une étape consistant à rétablir les conditions de pression atmosphérique à l'intérieur de la chambre à vide;
- une deuxième étape de réalisation de conditions de vide à l'intérieur de la chambre à vide à un degré de vide inférieur à celui de l'étape précédente de réalisation de conditions de vide;
- une deuxième étape de coulée de la résine sous vide dans laquelle la résine est ultérieurement coulée sur la plaque, de façon à obtenir un revêtement complet de la surface exposée de la plaque (11);
- une étape consistant à rétablir les conditions de pression atmosphérique à l'intérieur de la chambre à vide (21);
- une étape consistant à extraire la plaque (11) de la chambre à vide (21);
- une étape consistant à faire durcir la résine.

8. Procédé selon la revendication 7 , dans lequel, après la deuxième étape de coulée, ledit procédé comprend en outre:
- une étape consistant à augmenter la pression au-dessus de la pression atmosphérique dans la chambre (21);
- une étape consistant à rétablir les conditions de pression atmosphérique à l'intérieur de la chambre (21).
